# EUROPÄISCHE PATENTSCHRIFT

(11) **EP 0 689 988 B1**
(45) Veröffentlichungstag und Bekanntmachung des Hinweises auf die Patenterteilung: **12.11.1997**
(21) Anmeldenummer: 95110130.2
(22) Anmeldetag: 29.06.1995
(51) Int. Cl.: B62M 9/10

(54) **Kettenschaltung, insbesondere für Fahrräder**
Derailleur, particularly for bicycles
Dérailleur, notamment pour bicyclettes

(30) Priorität: 29.06.1994 DE 4434752
(43) Veröffentlichungstag der Anmeldung: 03.01.1996
(73) Patentinhaber: FICHTEL & SACHS AG, D-97424 Schweinfurt (DE)
(72) Erfinder: Bodmer, Jörg, Dipl.-Ing. (FH), D-97422 Schweinfurt (DE)

(56) Entgegenhaltungen:
- EP-A- 0 008 851
- EP-A- 0 429 007
- EP-A- 0 444 645
- EP-A- 0 474 139
- EP-A- 0 642 972
- FR-A- 2 467 135
- FR-A- 2 657 134
- GB-A- 2 005 363

## Beschreibung

Die Erfindung bezieht sich auf eine Kettenschaltung, insbesondere für Fahrräder, umfassend eine treibende Kettenradeinheit und eine angetriebene Kettenradeinheit sowie eine diese beiden Kettenradeinheiten miteinander verbindende Kette, wobei mindestens eine der Kettenradeinheiten als Mehrkettenradeinheit mit mindestens zwei Kettenrädern, nämlich einem größeren und einem kleineren Kettenrad, ausgebildet ist, wobei weiter die beiden Kettenräder der Mehrkettenradeinheit je eine Vielzahl von Zähnen und mindestens eine zwischen jeweils einem Zahnpaar gebildete Zahnlücke aufweist, wobei weiter die Kette von aufeinanderfolgenden Kettengelenken und von inneren und äußeren Laschenpaaren in abwechselnder Reihenfolge zwischen den Kettengelenken gebildet ist, wobei weiter zum Umlegen der Kette zwischen den beiden Kettenrädern der Mehrkettenradeinheit eine Umlegeeinrichtung in einem Einlaufbereich vorgesehen ist, welchem die Kette bei normaler Umlaufrichtung der Kette und der Kettenräder in die Mehrkettenradeinheit einläuft und diese Umlegeeinrichtung dazu ausgebildet ist, um die Kette Bewegungen in einer zur Achse der Mehrkettenradeinheit parallelen Richtung zu erteilen, wobei weiter beim Umlegen der Kette zwischen den Kettenrädern der Mehrkettenradeinheit sich eine Kettenübergangsstrecke zwischen einem altbesetzten und einem neubesetzten der beiden Kettenräder ausbildet, welche Kettenübergangsstrecke den Umlaufbereich der Mehrkettenradeinheit vom Ketteneinlaufbereich bis zu einem Kettenablaufbereich der Mehrkettenradeinheit durchläuft, wobei weiter die Kettenübergangsstrecke sich entgegen der normalen Umlaufrichtung des Kettenradsatzes erstreckt von einem Kettengelenk, das als letztes Kettengelenk zwischen zwei Letztzähne eines Letztzähnepaares des altbesetzten Kettenrades eingreift, zu einem Kettengelenk, das als erstes zwischen zwei Erstzähne eines Erstzähnepaares des neubesetzten Kettenrads eingreift und wobei in mindestens einem der Kettenumlegung in der Umlegerichtung kleineres Kettenrad in Richtung des größeren Kettenrades entsprechenden Kettenübergangsumfangsbereich der Mehrkettenradeinheit an den Kettenrädern Gestaltungsmaßnahmen getroffen sind, um in diesem Kettenübergangsumfangsbereich das Umlegen der Kette zwischen den beiden Kettenrädern in Richtung des größeren Kettenrades zu erleichtern und den Verlauf der entsprechenden Kettenübergangsstrecke festzulegen.

Es sind bereits Kettenschaltungen bekannt (DE-OS 39 36 921), bei denen die Kettenradanordnung mit wenigstens einem großen, mit Zähnen besetzten Kettenrad und einem kleinen, mit Zähnen besetzten Kettenrad besteht, welche einander benachbart und wahlweise in eine Fahrrad- Antriebskette eingreifbar sind, die aus einer zur Schleife geschlossenen Reihe von schwenkbar miteinander verbundenen Verbindungsplättchen besteht. Die Zähne des kleinen Kettenrades haben ein derartiges Phasenverhältnis bezüglich des die Kette aufnehmenden Bereichs des großen Kettenrades, daß ein Zahn des kleinen Zahnrades der bezüglich des Bezugszahnes unterhalb angeordnet ist, in die Kette eingreift, wenn der Verbindungsbereich der Kette dem die Kette aufnehmenden Bereich des Bezugszahnes aufgenommen wird. Zum einwandfreien Kettenwechselvorgang vom kleinen auf das große Kettenrad ist ein ausgeschnittener Bereich, das heißt, verkürzte Zähne vorgesehen. Vor diesen Zähnen sind Abweisefasen angebracht, so daß erst dann geschaltet werden kann, wenn die Kette seitlich ausgelenkt und über die verkürzten Zähne des kleineren und nächstgrößeren Zahnrades verläuft. Nachteilig ist hierbei, daß in Umfangsrichtung größere Längen zum Schalten benötigt werden, und daß hauptsächlich bei kleinen Zahnkränzen für das Schalten vom größeren zum kleineren Zahnkranz kein entsprechender Raumbedarf für eine derartige Schaltstelle vorgesehen werden kann. Eine derartige Schaltstelle benötigt mehrere nacheinander angeordnete Zähne am größeren Zahnkranz, die eine spezielle Formgebung (Anfasung, Rampen, Abschrägung) aufweisen müssen. Des weiteren ist ein erhöhter Verschleiß der Zahnkränze durch die verkürzten Zähne gegeben.

Der Erfindung liegt die Aufgabe zugrunde, eine weitere Erleichterung des Übergangs, insbesondere von dem größeren Kettenrad auf das kleines Kettenrad gegebenenfalls aber auch vom kleineren Kettenrad auf das größere Kettenrad, auch bei kleinen Zähnezahldifferenzen zu ermöglichen. Insbesondere soll erreicht werden, daß dann, wenn von einem zum anderen Kettenrad unter Last ein Übergang bewerkstelligt werden soll, dieser Übergang geräuscharm, sicher und stoßfrei erfolgt und die Kette möglichst rasch in Eingriff mit dem neugewählten Kettenrad tritt.

Zur Lösung dieser Aufgabe wird erfindungsgemäß die Kombination der folgenden Merkmale vorgeschlagen:
a) in dem dem Umlegen von dem kleineren Kettenrad auf das größere Kettenrad entsprechende Kettenübergangsumfangsbereich ist an dem dem kleineren Kettenrad benachbarten Kettenrad unter Bildung einer Doppelzahnlücke ein Zahn ausgespart, welche in der normalen Umlaufrichtung dem vorlaufenden Erstzahn des Erstzähnepaars des größeren Kettenrads folgt;
b) an dem großen Kettenrad ist auf seiner dem kleineren Kettenrad zugekehrten Seitenfläche im Basisbereich eines Zahns, welcher der Doppelzahnlücke in der normalen Umlaufrichtung vorausgeht und gewünschtenfalls noch in dem vorlaufenden Endbereich der Doppelzahnlücke eine Laschenauflagerampe ausgebildet, welche in normaler Umlaufrichtung dem nachlaufenden Letztzahn des Letztzähnepaars des kleineren Kettenrads nachläuft;
c) durch die Laschenauflagerampe und einen Boden der Doppelzahnlücke ist ein - in axialer Richtung betrachtet - nach radial außen konvex gekrümmter oder geknickter Verlauf der Kettenübergangsstrecke innerhalb des Kettenübergangsumfangsbereichs zwischen dem Erstzähnepaar des größeren Kettenrads und dem Letztzähnepaar des kleineren Kettenrads erzwungen, wobei die gekrümmte Kettenübergangsstrecke in die Zahnlücke zwischen den beiden Letztzähnen des Letztzähnepaars des kleineren Kettenrads einmündet;
d) der in normaler Umlaufrichtung vorauslaufende Erstzahn des Erstzähnepaars des größeren Kettenrads ist für den Eingriff sowohl zwischen die Laschen eines Innenlaschenpaars als auch zwischen die Laschen eines Außenlaschenpaars ausgebildet.

Nach einem weiteren wesentlichen Merkmal ist vorgesehen, daß der im Umlaufrichtung vor der Zahnlücke angeordnete Zahn in Axialrichtung gesehen außen eine Einprägung, bestehend aus einer in Umlaufrichtung verlaufenden, nach außen gerichteten Fläche zur Abstützung der Ketteninnenlasche und eine senkrecht dazu schräg verlaufende, der Passage der Kette dienenden Fläche aufweist und/oder daß in Umlaufrichtung der der Zahnlücke folgende zweite Zahn eine Einprägung, bestehend aus einer in Umlaufrichtung verlaufende, nach außen gerichteten Fläche zur Abstützung der Ketteninnenlaschen und eine senkrecht dazu schräg verlaufende der Passage der Kette dienende Fläche aufweist.

Vorteilhaft ist hierbei, daß ein sicherer Gangwechsel auf die kleineren Zahnkränze möglich ist. Beim Gangswechsel mit Zahnkränzen mit kleinen Zähnezahldifferenzen ist der Kopfkreis des nächstkleineren Zahnkranzes nur geringfügig kleiner als der Kopfkreis des Ausgangszahnkranzes. Die Einprägungen bzw. Schaltrampen werden sowohl an dem der Zahnlücke in Umlaufrichtung voreilenden Zahn als auch an dem der Zahnlücke folgendem zweiten Zahn in axialer Richtung gesehen außen angebracht, so daß bei Auslenkung des Schaltwerkes sich die Ketteninnenlaschen auf die vorgenannten Einprägungen bzw. Schaltrampen legen und so an exakt aufeinander abgestimmten Stellen den Kopfkreis des kleineren Zahnkranzes überwinden.

Eine günstige Ausführungsform sieht vor, daß dem die Abschrägung aufweisenden Zahn ein Zahn mit einer in Axialrichtung gesehen, außen engeordneten Einprägung in Umlaufrichtung nachläuft.

Eine weitere Ausgestaltung sieht vor, daß dem die Abschrägung aufweisenden Zahn eine Zahnlücke in Umlaufrichtung vorläuft.

Hierbei ist von Vorteil, daß zum verbesserten Schalten der Zahnkränze mit kleinen Zähnezahldifferenzen eine der Schaltgasse am größeren Zahnkranz um einen Zentriwinkel voreilende Zahnlücke am kleineren Zahnkranz vorgesehen ist, so daß der am kleineren Zahnkranz benötigte Fangzahn gleichzeitig als aktive Schaltweiche zum größeren Zahnkranz benutzt werden kann.

Des weiteren ist nach einem wesentlichen Merkmal vorgesehen, daß mindestens eine Aussparung zwischen zwei aufeinanderfolgenden Zähnen eines Kettenrads vorgesehen ist, wobei der Zahngrund im Rollenauflagebereich der Zahnlücke mindestens in dem in Umlaufrichtung nachlaufenden Bereich gegenüber dem Fußkreis der übrigen Zahngründe eine Erhöhung aufweist.

Hierbei ist von Vorteil, daß im Bereich der Zahnlücke ein Kettenlängungsausgleich vorgesehen wird, der ein ruckfreies Ablaufen der Kette durch die Zahnlücke gewährleistet. Bei Zahnkränzen mit kleinen Zähnezahlen kann ein Kettenlängungsausgleich nicht mehr durch veränderte Zentriwinkel vorgenommen werden. Durch die Erhöhung des Fußkreises im Bereich der in Umlaufrichtung nacheilenden Rollenauflage der Zahnlücke, lassen sich die Zentriwinkel der Normverzahnung beibehalten. Die Erhöhung des Fußkreises ist dabei so groß bemessen, daß das Ein- bzw. Ausschwenken der Kettenrolle, am in Umlaufrichtung voreilenden Doppellückenbegrenzungszahn, sich in nichts von dem Verhalten von Standardzähnen unterscheidet.

Bevorzugte Ausführungsbeispiele sind in den Zeichnungen schematisch dargestellt.

Es zeigt:
- Fig. 1: eine Seitenansicht eines Hinterradnaben-Kettenradsatzes eines Fahrrads mit Kette und Kettenwerfereinrichtung;
- Fig. 2: einen Ausschnitt aus Fig. 1 in vergrößerter Darstellung beim Übergang der Kette von einem kleineren Kettenrad auf ein größeres Kettenrad;
- Fig. 3: ein Kettenrad als Einzelteil mit einer Zahnlücke und Zähnen mit Einprägung;
- Fig. 4: ein weiteres Kettenrad von der Vorderseite betrachtet mit einem, einer Abschrägung aufweisenden Zahn;
- Fig. 5: einen Teil eines Kettenrades mit einer Zahnlücke und einer Erhöhung über den Fußkreisdurchmesser.

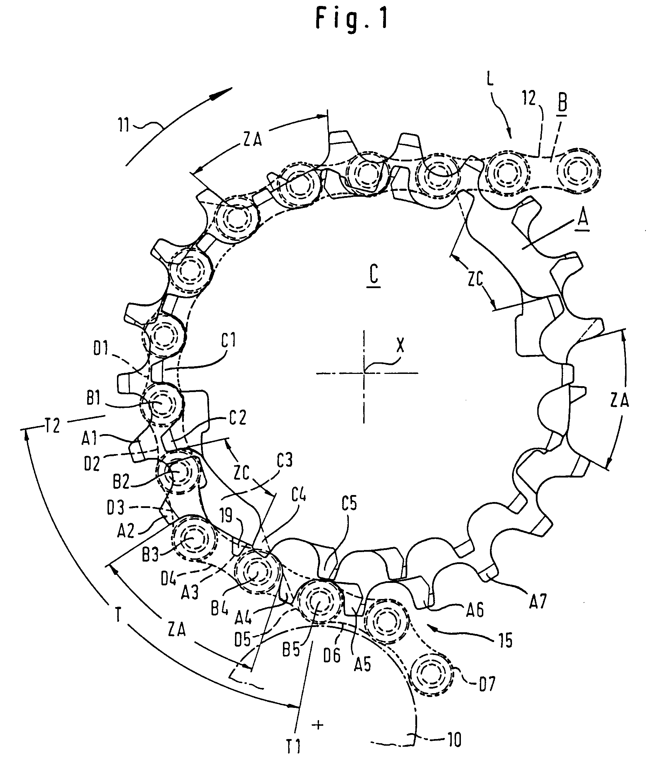

Die Fig. 1 zeigt zwei Kettenräder mit der gemeinsamen Drehachse eines Hinterrad-Kettenradsatzes eines Fahrrads, wobei das größere Kettenrad mit A und das kleinere Kettenrad mit C bezeichnet ist. Im Beispielsfall hat das große Kettenrad A 21 Zähne und das kleinere Kettenrad C 18 Zähne. Eine Kette, welche den Hinterrad-Kettenradsatz mit einem Tretkurbel-Kettenradsatz des Fahrrads verbindet, ist mit B bezeichnet. Die Kette B läuft über das Leitrad 10 einer Kettenwerfervorrichtung in den Kettenradsatz A, C ein. Die dem Vorwärtsantrieb entsprechende normale Kettenumfangsrichtung ist durch den Pfeil 11 angedeutet. Bei 12 erkennt man das zum Tretkurbel-Kettenradsatz tangential weiterlaufende, obere Kettenglied, bei 15 ist der Einlauf der Kette B in den Hinterrad-Kettenradsatz dargestellt.

Die Fig. 1 stellt den Umschaltvorgang von dem kleineren Kettenrad C auf das größere Kettenrad A dar. Man erkennt in der oberen Hälfte der Fig. 1, daß die Kette B noch in Eingriff mit dem kleineren Kettenrad C ist. In der unteren Hälfte der Fig. 1 erkennt man, daß ein Teil der Kette B bereits auf dem größeren Kettenrad A aufliegt.

Der Übergang der Kette B von dem kleineren Kettenrad C auf das große Kettenrad A ist durch Bewegung des Leitrads 10 senkrecht zur Zeichenebene nach hinten eingeleitet worden zu einem gegenüber dem Zeitpunkt des Zustands nach Fig. 1 früheren Zeitpunkt, zu dem sich der Zahn A1 des großen Kettenrades A noch vor dem Bereich des Leitrades 10 befand. Dabei ist eine Übergangszone der Kette entstanden, die als ganze mit T bezeichnet ist, deren nachlaufendes Ende mit T1 und deren vorlaufendes Ende mit T2 bezeichnet ist. Diese Übergangszone wandert bei Weiterdrehung des Kettenradsatzes A,C in der Drehrichtung 11 weiter. Wenn das nachlaufende Ende T1 der Übergangszone T in den Ablaufbereich L gemäß Fig. 1 gerät, in welchem die Kette B sich vom Kettenradsatz löst, um dem tretkubelseitigen Kettenradsatz zuzulaufen, dann ist der Schaltvorgang von dem kleineren Kettenrad C auf das große Kettenrad A beendet.

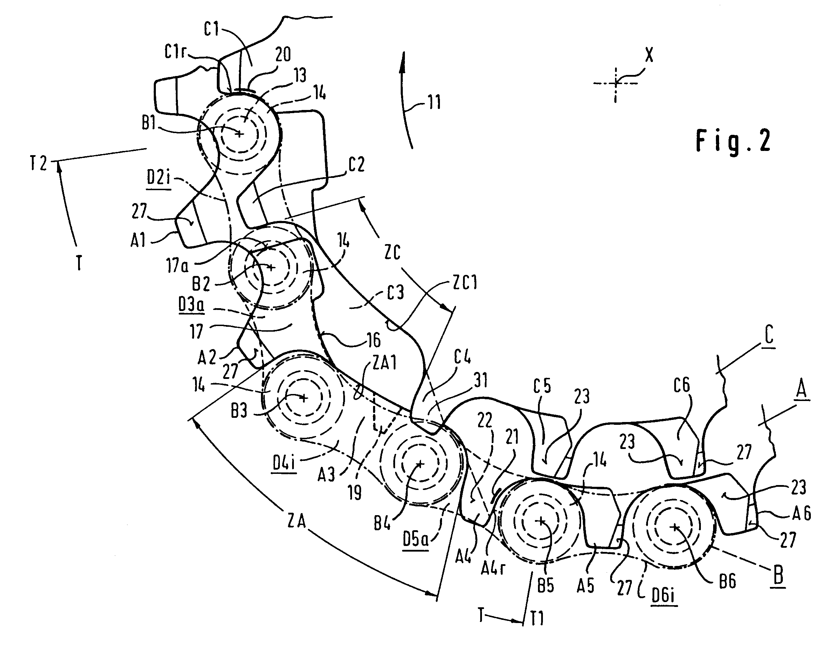

Der Schaltvorgang vom kleinen Kettenradsatz C auf den großen Kettenradsatz A läßt sich durch Betrachtung der Übergangszone T erklären, welche in Fig. 2 vergrößert dargestellt ist.

In der Fig. 2, welche den Übergangsbereich T vergrößert darstellt, erkennt man einen Kettengelenkpunkt B1. Dieser Kettengelenkpunkt B1 ist in üblicher Weise durch einen Bolzen 13 und eine Kettenrolle 14 gebildet. Der Kettengelenkpunkt B1 ist derjenige Kettengelenkpunkt, der vor Wirksamwerden der Schaltbewegung des Leitrades 10 noch voll in den Eingriff mit dem kleinen Kettenrad C gelangt, und zwar in eine Zahnlücke zwischen den Zähnen C1 und C2 des kleinen Kettenrades C. Der Kettengelenkpunkt B5, der genauso ausgebildet ist wie der Kettengelenkpunkt B1, ist der erste Kettengelenkpunkt, der nach dem Wirksamwerden der Schaltbewegung des Leitrads 10 in vollen Eingriff mit dem großen Kettenrad A gelangt ist, und zwar in die Zahnlücke zwischen den beiden Zähnen A4 und A5 des großen Kettenrades A. Das große Kettenrad A weist zwischen den aufeinanderfolgenden Zähnen A2 und A4 eine Zahnfehlstelle auf, die mit A3 bezeichnet ist.

Das kleine Kettenrad C weist zwischen seinen Zähnen C2 und C4 ebenfalls eine Zahnfehlstelle C3 auf. Die beiden Fehlstellen A3 und C3 ergeben vergrößerte Zahnlücken ZA und ZC. Diese Zahnlücken ZA und ZC erleichtern den Übergang der Kette B von dem kleinen Kettenrad C auf das große Kettenrad A.

Die Kettenrolle 14 des Kettengelenkpunktes B1 liegt noch voll in Eingriff mit zwei aufeinanderfolgenden Zähnen C1 und C2 des kleinen Kettenrades C. Die Kettenrolle 14 des Gelenkpunktes B2 ist aus der vergrößerten Zahnlücke ZC bereits etwas ausgehoben. Der Kettengelenkpunkt B3 ist also gegenüber dem Zahn A2 senkrecht zur Zeichenebene der Fig. 2 außer Treibeingriff mit dem Zahn A2. Der Zahn A4 greift zwischen die beiden Kettenlaschen des äußeren Kettenlaschenpaares D5a ein, der Kettengelenkpunkt B5 ist der erste Gelenkpunkt, der mit seiner Kettenrolle 14 zwischen zwei aufeinanderfolgenden Zähne A4 und A5 des großen Kettenrades A eingreift.
Man erkennt in Fig. 2, daß der Gelenkpunkt B2 von dem Boden ZC1 der vergrößerten Zahnlücke ZC abgehoben ist; das bedeutet, daß die Übergangskettenstrecke B1-B5 auch mit ihrem in Umlaufrichtung vordersten Abschnitt B1,B2 nicht tangential in das kleine Kettenrad C einläuft, sondern unter einem spitzen Winkel gegen eine Tangente an das kleine Kettenrad C, die durch den Gelenkpunkt B1 gelegt ist.

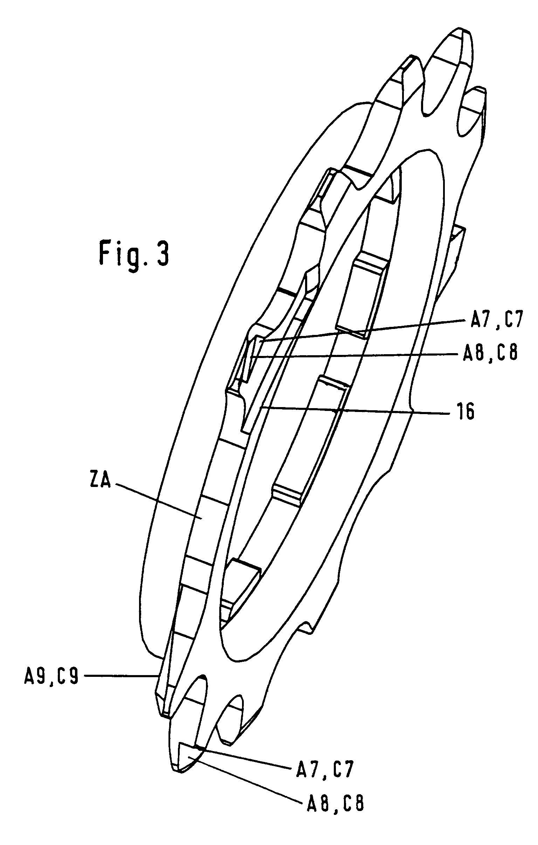

Aus Fig. 3 ist ein einzelner Zahnkranz ersichtlich, bei dem der der Zahnlücke ZA vorlaufende Zahn mit einer Einprägung versehen ist, wobei die nach außen gerichtete Fläche A7 die Ketteninnenlasche abstützt und die schräg verlaufende Fläche A8 der Passage der Kette vom größeren auf den kleineren Zahnkranz gewährleistet.

Der der Zahnlücke ZA folgende zweite Zahn ist ebenfalls mit einer nach außen gerichteten Fläche A7 und einer senkrecht dazu schräg verlaufenden Fläche A8 versehen.

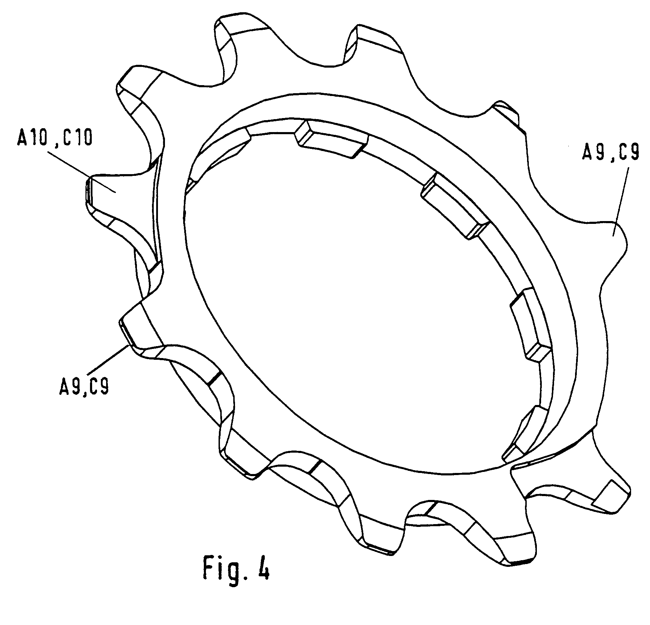

Die Fig. 4 zeigt einen Zahnkranz von der Vorderseite, wobei einer der Zähne auf seiner Rückseite eine Abschrägung A9 aufweist, diese Abschrägung auf der Rückseite des Zahnes A9 ist dem benachbarten größeren Zahnkranz zugewandt und dient zusammen mit einer Laschenauflagerampe 16 an diesem Zahnkranz zur Bildung einer Gasse für die Kette zum Schalten vom kleinen Zahnkranz zum großen Zahnkranz.

Im Gegensatz hierzu unterstützt die Fläche A7 sowie die senkrecht dazu schräg verlaufende Fläche A8 gemäß Fig. 3 den Schaltvorgang vom größeren Zahnkranz auf den kleineren Zahnkranz.

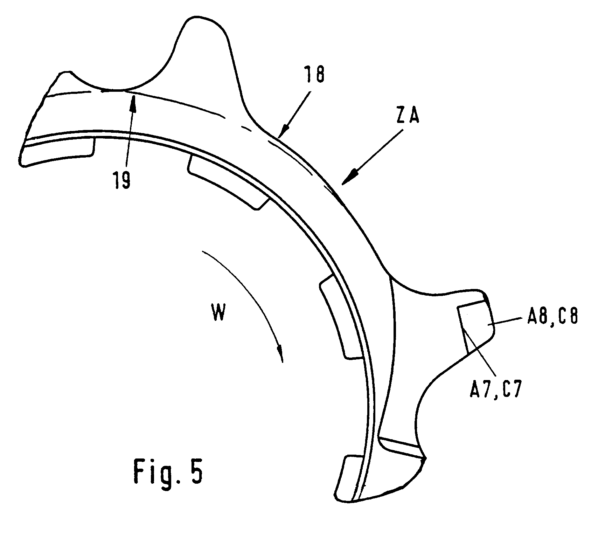

Aus der Fig. 5 ist eine Ausschnitt eines Zahnkranzes dargestellt, bei dem in der Zahnlücke ZA eine Erhöhung 18 über den Fußkreisdurchmesser 19 vorgenommen wurde. Für ein stoßfreies Ablaufen der Kette durch die Zahnlücke ZA dient dieser Fußkreisüberhöhung 18 dem Kettenlängungsausgleich. Die Erhöhung 18 ist derart bemessen, daß ein Ein- bzw. Ausschwenken der Kettenrolle der Kette sich nicht mehr vom Verhalten von Standartzähnen unterscheidet.

## Patentansprüche

1. Kettenschaltung, insbesondere für Fahrräder, umfassend eine treibende Kettenradeinheit und eine angetriebene Kettenradeinheit (A-C) sowie eine diese beiden Kettenradeinheiten miteinander verbindende Kette (B),
wobei mindestens eine (A-C) der Kettenradeinheiten als Mehrkettenradeinheit (A-C) mit mindestens zwei Kettenrädern (A,C), nämlich einem größeren (A) und einem kleineren Kettenrad (C), ausgebildet ist,
wobei weiter die beiden Kettenräder (A,C) der Mehrkettenradeinheit (A-C) je eine Vielzahl von Zähnen (A1...;C1...) und mindestens eine zwischen jeweils einem Zahnpaar (A1,A2;C1,C2) gebildete Zahnlücke (ZA,ZC) aufweist,
wobei weiter die Kette (B) von aufeinanderfolgenden Kettengelenken (B1...) und von inneren (D2i) und äußeren Laschenpaaren (D3a) in abwechselnder Reihenfolge zwischen den Kettengelenken (B1...) gebildet ist,
wobei weiter zum Umlegen der Kette zwischen den beiden Kettenrädern (A,C) der Mehrkettenradeinheit (A-C) eine Umlegeeinrichtung (10) in einem Einlaufbereich (15) vorgesehen ist, welchem die Kette (B) bei normaler Umlaufrichtung (11) der Kette (B) und der Kettenräder (A,C) in die Mehrkettenradeinheit (A-C) einläuft und diese Umlegeeinrichtung (10) dazu ausgebildet ist, um der Kette (B) Bewegungen in einer zur Achse (X) der Mehrkettenradeinheit A-C) parallelen Richtung zu erteilen,
wobei weiter beim Umlegen der Kette (B) zwischen den Kettenrädern (A,C) der Mehrkettenradeinheit (A-C) sich eine Kettenübergangsstrecke (B1-B5) zwischen einem altbesetzten (C) und einem neubesetzten (A) der beiden Kettenräder ausbildet, welche Kettenübergangsstrecke (B1-B5) den Umlaufbereich der Mehrkettenradeinheit (A-C) vom Ketteneinlaufbereich (15) bis zu einem Kettenablaufbereich (L) der Mehrkettenradeinheit (A-C) durchläuft,
wobei weiter die Kettenübergangsstrecke (B1-B5) sich entgegen der normalen Umlaufrichtung (11) des Kettenradsatzes (A,C) erstreckt von einem Kettengelenk (B1), das als letztes Kettengelenk (B1) zwischen zwei Letztzähne (C1,C2) eines Letztzähnepaares (C1,C2) des altbesetzten Kettenrades (C) eingreift, zu einem Kettengelenk (B5), das als erstes zwischen zwei Erstzähne (A4,A5) eines Erstzähnepaares (A4,A5) des neubesetzten Kettenrads (A) eingreift
und wobei in mindestens einem der Kettenumlegung in der Umlegerichtung kleineres Kettenrad (C) in Richtung des größeren Kettenrades (A) entsprechenden Kettenübergangsumfangsbereich (T) der Mehrkettenradeinheit (A-C) an den Kettenrädern (A,C) Gestaltungsmaßnahmen getroffen sind, um in diesem Kettenübergangsumfangsbereich (T) das Umlegen der Kette (B) zwischen den beiden Kettenrädern (C) in Richtung des größeren Kettenrades (A) zu erleichtern und den Verlauf der entsprechenden Kettenübergangsstrecke (B1-B5) festzulegen,
gekennzeichnet durch die folgenden Merkmale:
a) in dem dem Umlegen von dem kleineren Kettenrad (C) auf das größere Kettenrad (A) entsprechende Kettenübergangsumfangsbereich (T) ist an dem dem kleineren Kettenrad benachbarten Kettenrad (A) unter Bildung einer Doppelzahnlücke (ZA) ein Zahn (bei A3) ausgespart, welche in der normalen Umlaufrichtung (11) dem vorlaufenden Erstzahn (A4) des Erstzähnepaars (A4,A5) des größeren Kettenrads (A) folgt;
b) an dem großen Kettenrad (A) ist auf seiner dem kleineren Kettenrad (C) zugekehrten Seitenfläche im Basisbereich eines Zahns (A2), welcher der Doppelzahnlücke (ZA) in der normalen Umlaufrichtung (11) vorausgeht und gewünschtenfalls noch in dem vorlaufenden Endbereich der Doppelzahnlücke (ZA) eine Laschenauflagerampe (16) ausgebildet, welche in normaler Umlaufrichtung (11) dem nachlaufenden Letztzahn (C2) des Letztzähnepaars (C1,C2) des kleineren Kettenrads (C) nachläuft;
c) durch die Laschenauflagerampe (16) und einen Boden (ZA1) der Doppelzahnlücke (ZA) ist ein - in axialer Richtung betrachtet - nach radial außen konvex gekrümmter oder geknickter Verlauf (B1,B2,B3,B4,B5) der Kettenübergangsstrecke (B1-B5) innerhalb des Kettenübergangsumfangsbereichs (T) zwischen dem Erstzähnepaar (A4,A5) des größeren Kettenrads (a) und dem Letztzähnepaar (C1,C2) des kleineren Kettenrads (C) erzwungen, wobei die gekrümmte Kettenübergangsstrecke (B1-B5) in die Zahnlücke (C1-C2) zwischen den beiden Letztzähnen (C1,C2) des Letztzähnepaars (C1,C2) des kleineren Kettenrads (C) einmündet;
d) der in normaler Umlaufrichtung (11) vorauslaufende Erstzahn (A4) des Erstzähnepaars (A4,A5) des größeren Kettenrads (A) ist für den Eingriff sowohl zwischen die Laschen eines Innenlaschenpaars (D5i) als auch zwischen die Laschen eines Außenlaschenpaars (D5a) ausgebildet.

2. Kettenschaltung nach Anspruch 1, dadurch gekennzeichnet, daß der im Umlaufrichtung vor der Zahnlücke (ZA,ZC) angeordnete Zahn (A4,C4) in Axialrichtung gesehen außen eine Einprägung, bestehend aus einer in Umlaufrichtung verlaufenden, nach außen gerichteten Fläche (A7,C7) zur Abstützung der Ketteninnenlasche (B) und eine senkrecht dazu schräg verlaufende, der Passage der Kette (B) dienenden Fläche (A8,C8), aufweist und/oder daß in Umlaufrichtung der der Zahnlücke (ZA,ZC) folgende zweite Zahn (A1,C1) eine Einprägung, bestehend aus einer in Umlaufrichtung verlaufende, nach außen gerichteten Fläche (A7,C7) zur Abstützung der Ketteninnenlaschen (B) und eine senkrecht dazu schräg verlaufende der Passage der Kette (B) dienende Fläche (A8,C8) aufweist.

3. Kettenschaltung nach Anspruch 1, dadurch gekennzeichnet, daß mindestens ein Zahn (A9,C9) eine, in axialer Richtung auf der Rückseite liegende, Abschrägung aufweist, wobei dieser Zahn (A9,C9) im Bereich der Laschenauflagerrampe (16) des benachbarten größeren Kettenrades gegenüberliegend angeordnet ist.

4. Kettenschaltung nach Anspruch 3, dadurch gekennzeichnet, daß dem die Abschrägung aufweisenden Zahn (A9,C9) ein Zahn (A8,C8) mit einer in Axialrichtung gesehen, außen angeordneten Einprägung in Umlaufrichtung nachläuft.

5. Kettenschaltung nach Anspruch 3, dadurch gekennzeichnet, daß dem die Abschrägung aufweisenden Zahn (A9,C9) eine Zahnlücke (ZA,ZC) in Umlaufrichtung vorläuft.

6. Kettenschaltung, insbesondere für Fahrräder, umfassend eine treibende Kettenradeinheit und eine angetriebene Kettenradeinheit (A-C) sowie eine diese beiden Kettenradeinheiten miteinander verbindende Kette (B),
wobei mindestens eine (A-C) der Kettenradeinheiten als Mehrkettenradeinheit (A-C) mit mindestes zwei Kettenrädern (A,C), nämlich einem größeren (A) und einem kleineren Kettenrad (C), ausgebildet ist,
wobei weiter die beiden Kettenräder (A,C) der Mehrkettenradeinheit (A-C) je eine Vielzahl von Zähnen (A1...;C1...) und mindestens eine zwischen jeweils einem Zahnpaar (A1,A2;C1,C2) gebildete Zahnlücke (ZA,ZC) aufweist,
wobei weiter die Kette (B) von aufeinanderfolgenden Kettengelenken (B1...) und von inneren (D2i) und äußeren Laschenpaaren (D3a) in abwechselnder Reihenfolge zwischen den Kettengelenken (B1...) gebildet ist,
wobei weiter zum Umlegen der Kette zwischen den beiden Kettenrädern (A,C) der Mehrkettenradeinheit (A-C) eine Umlegeeinrichtung (10) in einem Einlaufbereich (15) vorgesehen ist, welchem die Kette (B) bei normaler Umlaufrichtung (11) der Kette (B) und der Kettenräder (A,C) in die Mehrkettenradeinheit (A-C) einläuft und diese Umlegeeinrichtung (10) dazu ausgebildet ist, um der Kette (B) Bewegungen in einer zur Achse (X) der Mehrkettenradeinheit A-C) parallelen Richtung zu erteilen, wobei weiter beim Umlegen der Kette (B) zwischen den Kettenrädern (A,C) der Mehrkettenradeinheit (A-C) sich eine Kettenübergangsstrecke (B1-B5) zwischen einem altbesetzten (C) und einem neubesetzten (A) der beiden Kettenräder ausbildet, welche Kettenübergangsstrecke (B1-B5) den Umlaufbereich der Mehrkettenradeinheit (A-C) vom Ketteneinlaufbereich (15) bis zu einem Kettenablaufbereich (L) der Mehrkettenradeinheit (A-C) durchläuft,
wobei weiter die Kettenübergangsstrecke (B1-B5) sich entgegen der normalen Umlaufrichtung (11) der Kette (B) erstreckt von einem Kettengelenk (B1), das als letztes Kettengelenk (B1) zwischen zwei Letztzähne (C1,C2) eines Letztzähnepaares (C1,C2) des altbesetzten Kettenrades (C) eingreift und zwischen einem Kettengelenk (B5), das als erstes zwischen zwei Erstzähne (A4,A5) eines Erstzähnepaares (A4,A5) des neubesetzten Kettenrads (A) eingreift und wobei in mindestens einem der Kettenumlegung in der Umlegerichtung kleineres Kettenrad (C) in Richtung des größeren Kettenrades (A) entsprechenden Kettenübergangsumfangsbereich (T) der Mehrkettenradeinheit (A-C) an den Kettenrädern (A,C) Gestaltungsmaßnahmen getroffen sind, um in diesem Kettenübergangsumfangsbereich (T) das Umlegen der Kette (B) zwischen den beiden Kettenrädern (A,C) zumindest in der Umlegerichtung kleineres Kettenrad (C) in Richtung des größeren Kettenrades (A) zu erleichtern und den Verlauf der entsprechenden Kettenübergangsstrecke (B1-B5) festzulegen,
dadurch gekennzeichnet, daß mindestens eine Aussparung zwischen zwei aufeinanderfolgenden Zähnen (A2,A4) eines Kettenrads (A) vorgesehen ist, wobei der Zahngrund im Rollenauflagebereich der Zahnlücke (ZA,ZC) mindestens in dem in Umlaufrichtung nachlaufenden Bereich gegenüber dem Fußkreis der übrigen Zahngründe eine Erhöhung aufweist.

## Claims

1. Derailleur gear, in particular for cycles, comprising a driving sprocket unit and a driven sprocket unit (A-C) as well as a chain (B) connecting these two sprocket units together,
at least one (A-C) of the sprocket units being in the form of a multi-sprocket cluster (A-C) with at least two sprockets (A, C) namely a larger (A) and a smaller sprocket (C),
furthermore the two sprockets (A, C) of the multi-sprocket cluster (A-C) each having a number of teeth (A1...;C1...) and at least one tooth gap (ZA, ZC) formed between a respective pair of teeth (A1, A2; C1, C2),
furthermore the chain (B) being formed of successive chain pivots (B1...) and inner (D2i) and outer (D3a) pairs of links in alternating sequence between the pivots (B1...),
furthermore for shifting the chain between the two sprockets (A, C) of the multi-sprocket cluster (A-C) there being provided a shifting device (10) in an entry region (15) which the chain (B) enters in the normal direction (11) of movement of the chain (B) and the sprockets (A, C) into the multi-sprocket cluster (A-C) and this shifting device (10) being constructed so as to impart to the chain (B) movements in a direction parallel to the axis (X) of the multi-sprocket cluster (A-C),
furthermore on the shifting of the chain (B) between the sprockets (A, C) of the multi-sprocket unit (A-C) a chain transition region (B1-B5) is formed between a previously engaged one (C) and a newly engaged one (A) of the two sprockets, which chain transition region (B1-B5) passes through the region of rotation of the multi-sprocket cluster (A-C) from the chain entry region (15) to a chain departure region (L) of the multi-sprocket cluster (A-C), furthermore the chain transition region (B1-B5) extending opposite to the normal direction of rotation (11) of the sprocket set (A,C) from a pivot (B1) which as the last pivot (B1) engages between two last teeth (C1, C2) of a last pair of teeth (C1, C2) of the previously engaged sprocket (C) to a pivot (B5) which as the first one engages between two first teeth (A4, A5) of a first pair of teeth (A4, A5) of the newly engaged sprocket (A)
and in at least one chain transition peripheral region (T) corresponding to the shifting of the chain in the shifting direction from the smaller sprocket (C) in the direction of the larger sprocket (A) of the multi-sprocket cluster (A-C) shaping measures are undertaken on the sprockets (A, C) in order to ease in this chain transition peripheral region (T) the shifting the chain (B) between the two sprockets (C) in the direction of the larger sprocket (A) and to determine the course of the corresponding chain transition region (B1-B5),
characterised by the following features:
a) in the chain transition peripheral region (T) corresponding to shifting from the smaller sprocket (C) to the larger sprocket (A) a tooth (at A3)) is omitted on the sprocket (A) adjacent to the smaller sprocket to form a double tooth gap (ZA), the omitted tooth being that which in the normal direction of rotation (11) follows the preceding first tooth (A4) of the first pair of teeth (A4, A5) of the larger sprocket (A);
b) on the large sprocket (A), on that side face of it which faces towards the smaller sprocket (C) in the region of the root of a tooth (A2) which precedes the double tooth gap (ZA) in the normal direction of rotation (11) and if necessary further in the preceding end region of the double tooth gap (ZA) there is formed a link-engaging ramp (16) which in the normal direction of rotation (11) follows the succeeding last tooth (C2) of the last tooth pair (C1, C2) of the smaller sprocket (C);
c) by the link-engaging ramp (16) and a base (ZA1) of the double tooth gap (ZA) there is formed - looking axially - a radially outwardly convexly curved or kinked path (B1, B2, B3, B4, B5) of the chain transition region (B1-B5) within the chain transition peripheral region (T) between the first tooth pair (A4, A5) of the larger sprocket (a) and the last tooth pair (C1, C2) of the smaller sprocket (C), the curved chain transition region (B1-B5) opening into the tooth gap (C1-C2) between the two last teeth (C1, C2) of the last tooth pair (C1, C2) of the smaller sprocket (C);
d) the first tooth (A4) of the first tooth pair (A4, A5) of the larger sprocket (A) which leads in the normal direction of rotation (11) is formed for engagement both between the links of an inner pair of links (D5i) and also between the links of an outer pair of links (D5a).

2. Derailleur gear according to claim 1, characterised in that the tooth (A4, C4) arranged in the circumferential direction ahead of the tooth gap (ZA, ZC) is provided, looking axially, outwardly with an indentation comprising a face (A7, C7) directed outwards and extending circumferentially for engaging the inner links of the chain (B) and a face (A8, C8) extending in an inclined direction perpendicular thereto and serving for the passage of the chain (B), and/or that the second tooth (A1, C1) following the tooth gap (ZA, ZC) in a circumferential direction has an indentation comprising a face (A7, C7) directed radially outwards and extending circumferentially for engaging the inner links of the chain (B) and a face (A8, C8) which is perpendicular thereto and extends in an inclined direction and serves for the passage of the chain (B).

3. Derailleur gear according to claim 1, characterised in that at least one tooth (A9, C9) has a chamfer lying in an axial direction on its rear face, this tooth (A9, C9) being arranged in the region of the link-engaging ramp (16) of the adjacent opposing larger sprocket.

4. Derailleur gear according to claim 3, characterised in that the tooth (A9, C9) having the chamfer is followed in a circumferential direction by a tooth (A8, C8) with an indentation which is arranged outside looking in an axial direction.

5. Derailleur gear according to claim 3, characterised in that the tooth (A9, C9) having the chamfer is preceded in a circumferential direction by a tooth gap (ZA, ZC).

6. Derailleur gear, in particular for cycles, comprising a driving sprocket unit and a driven sprocket unit (A-C) as well as a chain (B) connecting these two sprocket units together,
at least one (A-C) of the sprocket units being in the form of a multi-sprocket cluster (A-C) with at least two sprockets (A, C) namely a larger (A) and a smaller (C) sprocket,
furthermore the two sprockets (A,C) of the multi-sprocket cluster (A-C) each having a number of teeth (A1...; C1...) and at least one tooth gap (ZA, ZC) formed between a respective pair of teeth (A1, A2; C1, C2),
furthermore the chain (B) being formed by successive chain pivots (B1...) and inner (D2i) and outer(D3a) pairs of links in alternating sequence between the pivots (B1...),
furthermore for shifting the chain between the two sprockets (A,C) of the multi-sprocket cluster (A-C) there being provided a shifting device (10) in an entry region (15) which the chain (B) enters in the normal direction of rotation (11) of the chain (B) and the sprockets (A, C) into the multi-sprocket cluster (A-C) and this shifting device (10) being of such a construction as to impart to the chain (B) movements in a direction parallel to the axis (X) of the multi-sprocket cluster (A-C), furthermore on shifting of the chain (B) between the sprockets (A, C) of the multi-sprocket cluster (A-C) a chain transition region (B1-B5) is formed between a previously engaged one (C) and a newly engaged one (A) of the two sprockets, which chain transition region (B1-B5) passes through the region of rotation of the multi-sprocket cluster (A-C) from the chain entry region (15) to a chain departure region (L) of the multi-sprocket cluster (A-C),
furthermore the chain transition region (B1-B5) extending opposite to the normal direction of rotation (11) of the chain (B) from a chain pivot (B1) which as the last pivot (B1) engages between two last teeth (C1, C2) of a last tooth pair (C1, C2) of the previously engaged sprocket (C) and between a pivot (B5) which engages as the first one between two first teeth (A4, A5) of a pair of first teeth (A4, A5) of the newly engaged sprocket (A) and whereby in at least one chain transition peripheral region (T) of the multi-sprocket cluster (A-C) corresponding to the shifting of the chain in the shifting direction from a smaller sprocket (C) in the direction of the larger sprocket (A) shaping measures are undertaken on the sprockets (A, C) in order to ease, in this chain transition peripheral region (T), the shifting of the chain (B) between the two sprockets (A, C) at least in the shifting direction from smaller sprocket (C) in the direction of the larger sprocket (A) and to determine the path of the corresponding chain transition region (B1-B5),
characterised in that at least one gap is provided between two successive teeth (A2, A4) of a sprocket (A), the root of the tooth in the roller engaging region of the tooth gap (ZA, ZC) having a raised portion in relation to the root circle of the roots of the remaining teeth at least in the region which follows in a circumferential direction.

## Revendications

1. Dérailleur, en particulier pour bicyclettes, comprenant un ensemble de pignons d'entraînement par chaîne et un ensemble de pignons entraînés par chaîne (A-C), ces deux ensembles étant reliés par une chaîne (B), dans lequel :
• au moins un des ensembles (A-C) est un ensemble polydémultiplié comportant au moins deux pignons à chaîne (A, C), en particulier un grand pignon (A) et un petit pignon (C),
• les deux pignons (A, C) de l'ensemble démultiplié ont chacun un certain nombre de dents (A1..., C1...) et, également au moins un entredent (ZA, ZC) entre leurs paires de dents (A1, A2 ; C1, C2) respectivement,
• la chaîne (B) est constituée d'articulations successives (B1...) et de paires de maillons intérieures (D2i) et extérieures (D3a) se succédant alternativement entre les articulations (B1...),
• pour dévier la chaîne entre les deux pignons (A, C) de l'ensemble polydémultiplié (A-C), il est prévu un dispositif déviateur (10) situé dans une zone d'entrée (15) à travers laquelle arrive la chaîne (B) dans l'ensemble polydémultiplié (A-C) lorsque la chaîne (B) et les pignons (A, C) se déplacent dans le sens normal de circulation (11), le dispositif déviateur (10) étant conçu pour déplacer la chaîne (B) selon une direction parallèle de l'axe (X) de l'ensemble (A-C),
• lorsque la chaîne (B) est déviée entre les pignons (A, C) de l'ensemble polydémultiplié (A-C), il se forme, entre une dent déjà occupée (C) d'un pignon et une dent nouvellement occupée (A) de l'autre pignon, un segment de passage de chaîne (B1-B5) qui traverse l'espace de rotation de l'ensemble polydémultiplié pour aller de la zone (15) d'entrée de chaîne à une zone (L) de sortie où la chaîne se sépare de l'ensemble,
• de plus, le segment de passage de chaîne (B1-B5), dans le sens opposé au sens normal de rotation (11) du jeu de pignons (A, C), va d'une articulation de chaîne (B1) qui est la dernière articulation située entre les dernières dents (C1, C2) d'une dernière paire de dents (C1,C2) appartenant au pignon (C), initialement occupé, à une articulation de chaîne (B5) qui est la première articulation en prise entre les deux dents (A4, A5) d'une première paire de dents (A4, A5) du pignon à chaîne (A) nouvellement occupé,
• au moins dans une zone périphérique (T) de l'ensemble polydémultiplié (A-C) couvrant la zone de passage de la chaîne et correspondant à la déviation de la chaîne du petit pignon (C) en direction du grand pignon (A), des dispositions sont prises au niveau de la configuration des pignons de chaîne (A, C) pour faciliter dans cette zone (T) la déviation de la chaîne (B) entre les deux pignons (C) en direction du grand pignon (A) et pour déterminer le parcours du segment de passage de chaîne correspondent (B1-B5), le dérailleur présentant les caractéristiques suivantes :
a) dans la zone périphérique (T) de passage de la chaîne, correspondant à sa déviation du petit pignon (C) vers le grand pignon (A), il est prévu, sur le pignon (A) voisin du petit pignon, de supprimer une dent (en A3) avec formation d'un entredent double (ZA), la dent supprimée suivant, dans le sens normal de rotation (11), la première dent (A4) de la première paire de dents (A4, A5) appartenant au grand pignon (A),
b) le grand pignon (A), sur sa face latérale en regard du pignon plus petit (C) comporte, au niveau de la base d'une dent (A2) qui, dans le sens normal de rotation (11), est en avant du double entredent (ZA) et, si on le souhaite, se trouve également dans la partie extrême amont du double entredent (ZA), une rampe (16) d'appui de maillons qui, dans le sens normal de rotation (11) du dernier pignon, suit, en arrière, la dernière dent (C2) de la dernière paire de dents (C1, C2) du petit pignon,
c) la rampe d'appui de maillon (16) et le fond (ZA1) du double entredent (ZA), (observé selon la direction axiale), imposent un tracé convexe vers l'extérieur, coudé (B1, B2, B3, B4, B5), au segment de passage de chaîne (B1-B5) se trouvant à l'intérieur de la zone de passage de chaîne (T) entre la première paire de dents (A4, A5) du plus grand pignon(a) et la dernière paire de dents (C1, C2) du plus petit pignon à chaîne (C), le segment de passage (B1-B5) courbe aboutissant dans l'entredent (C1-C2) entre les deux dernières dents (C1, C2) de la dernière paire de dents (C1, C2) du petit pignon (C),
d) la première dent (A4), appartenant à la première paire (A4, A5) et située, par rapport au sens de déplacement périphérique (11) le plus en avant est conçue pour être en prise aussi bien entre les maillons d'une paire de maillons internes (D5i) qu'entre les maillons d'une paire de maillons externes (D5a).

2. Déraiileur selon la revendication 1,
caractérisé en ce que
la dent (A4, C4) située par rapport au sens de rotation, en amont du double entredent (ZA, ZC) présente, vue selon la direction axiale, une empreinte constituée par une portée (A7, C7) dirigée vers l'extérieur dans la direction et au sens du déplacement périphérique et servant d'appui aux maillons internes de la chaîne (B), ainsi que par une portée (A8, C8) perpendiculaire à la précédente et inclinée obliquement, servant au passage de la chaîne (B), tandis qu'en plus ou en alternative, la dent (A1, C1) située en deuxième position en aval de l'entredent allongé (ZA, ZC) présente une empreinte constituée par une portée (A7, C7) dirigée vers l'extérieur en direction au sens du déplacement périphérique et servant d'appui aux maillons internes de la chaîne (B), ainsi que par une portée (A8, C8) perpendiculaire à la précédente et inclinée obliquement, servant au passage de la chaîne (B).

3. Dérailleur selon la revendication,
caractérisé en qu'
au moins une dent (A9, C9) présente une empreinte située sur sa face arrière en direction axiale, cette dent (Ag, Cg) étant disposée dans la zone de la rampe d'appui (16) du plus grand pignon voisin.

4. Dérailleur selon la revendication 3,
caractérisé en ce que
la dent (A9-C9) présentant une partie en pente est suivie, dans le sens de rotation, d'une dent (A8, C8) qui, observée selon la direction axiale, porte une empreinte vers l'extérieur.

5. Dérailleur selon la revendication 3,
caractérisé en ce que
la dent (A9, C9) portant une empreinte, précède un entredent double (ZA, ZC), par rapport au sens de rotation.

6. Dérailleur, en particulier pour bicyclettes comprenant un ensemble de pignons d'entraînement par chaîne et un ensemble de pignons entraînés par chaîne (A-C), ces deux ensembles étant reliés par une chaîne (B), dans lequel :
• au moins un des ensembles (A-C) est un ensemble polydémultiplié comportant au moins deux pignons à chaîne (A, C), en particulier un grand pignon (A) et un petit pignon (C),
• les deux pignons (A, C) de l'ensemble démultiplié ont chacun un certain nombre de dents (A1... ; C1...) et également au moins un entredent (ZA, ZC) entre leurs paires de dents (A1, A2 ; C1, C2) respectivement ,
• la chaîne (B) est constituée d'articulations successives (B1 ...) et de paires de maillons intérieures (D2i) et extérieures (D3a) se succédant alternativement entre les articulations (B1 ...),
• pour dévier la chaîne entre les deux pignons (A, C) de l'ensemble polydémultiplié (A-C), il est prévu un dispositif déviateur (10) situé dans une zone d'entrée (15) à travers laquelle arrive la chaîne (B) dans l'ensemble polydémuitiplié (A-C) lorsque la chaîne (B) et les pignons (A, C) se déplacent dans le sens normal de circulation (11), le dispositif déviateur (10) étant conçu pour déplacer la chaîne (B) selon une direction parallèle de l'axe (X) de l'ensemble (A-C),
• lorsque la chaîne (B) est déviée entre les pignons (A, C) de l'ensemble polydémultiplié (A-C), il se forme, entre une dent déjà occupée (C) d'un pignon et une dent nouvellement occupée (A) de l'autre pignon, un segment de passage de chaîne (B1-B5) qui traverse l'espace de rotation de l'ensemble polydémultiplié pour aller de la zone (15) d'entrée de chaîne à une zone (L) de sortie où la chaîne se sépare de l'ensemble,
• de plus, le segment de passage de chaîne (B1-B5), dans le sens opposé au sens normal de rotation (11) du jeu de pignons (A, C), va d'une articulation de chaîne (B1) qui est la dernière articulation située entre les dernières dents (C1, C2) d'une dernière paire de dents (C1, C2) appartenant au pignon (C) initialement occupé, à une articulation de chaîne (35) qui est la première articulation en prise entre les dents (A4, A5) d'une première paire de dents (A4, A5) du pignon à chaîne (A) nouvellement occupé,
• au moins dans une zone périphérique (T) de l'ensemble polydémultiplié (A-C) couvrant la zone de passage de la chaîne et correspondant à la déviation de la chaîne du petit pignon (C) vers le grand pignon (A), des dispositions sont prises au niveau de la configuration des pignons de chaîne (A, C) pour faciliter dans cette zone (T) la déviation de la chaîne (B) entre les deux pignons (C) en direction du grand pignon (A) et pour déterminer le parcours du segment de passage de chaîne correspondant (B1-B5),
caractérisé en ce qu'
il est prévu, qu'entre deux dents successives (A2, A4) d'un pignon à chaîne (A) se trouve au moins un évidement, et que le fond de dent situé dans la zone d'appui des galets à l'intérieur de l'entredent double (ZA, ZC) présente, au moins dans la zone aval par rapport au sens de rotation, une partie surélevée par rapport au cercle défini par les bases des autres dents.
